# EUROPEAN PATENT APPLICATION

(11) **EP 4 749 278 A1**
(43) Date of publication of application: **27.05.2026**
(21) Application number: 24215334.4
(22) Date of filing: 26.11.2024
(51) Int. Cl.: G01N 29/02, G01N 15/01, G01N 29/036, G01N 29/12, G01N 29/24, G01N 29/34, G01N 29/42

(54) **DEVICE AND METHOD FOR DETECTING PARTICLES, IN PARTICULAR MICROPARTICLES, BIOPARTICLES, SINGLE CELLS OR CELL CLUSTERS**

(71) Applicant: Helmholtz Zentrum München - Deutsches Forschungszentrum für Gesundheit und Umwelt (GmbH), 85764 Neuherberg (DE); Leibniz-Institut für Festkörper- und Werk stoffforschung Dresden e.V. (IFW Dresden e.V.), 01069 Dresden (DE)
(72) Inventor: Stiel, Prof. Dr. Andre-Christian, 85764 Neuherberg (DE); Göllner, Simon, 85764 Neuherberg (DE); Schmidt, Dr. Hagen, 01069 Dresden (DE); Winkler, Dr. Andreas, 01069 Dreseden (DE)
(74) Representative: Linsmeier, Josef

(57) **Abstract**

The disclosure relates to a device and a corresponding method for detecting particles, in particular microparticles, bioparticles, single cells or cell clusters, contained in a liquid. The device comprising an irradiation device configured to irradiate a volume of the liquid with time-varying, in particular pulsed or modulated, electromagnetic radiation, and at least one focused interdigital transducer (fIDT) configured to detect surface acoustic waves emanating from particles contained in the liquid in response to irradiating the volume of the liquid with the electromagnetic radiation, wherein the at least one focused interdigital transducer has a focal point or focal area and is preferably arranged such that the focal point or focal area of the focused interdigital transducer is located at or close to the irradiated volume of the liquid containing the particles. The disclosure allows for a sensitive detection of opto-acoustic waves emanating from particles contained in the liquid with a spatial resolution or spatial selectivity in the order of the particle diameter, and further enables a reproducible, precise, miniaturized and/or parallelized design of the device.

## Description

The present disclosure relates to a device and method for detecting particles, in particular microparticles, bioparticles, single cells or cell clusters, contained in a liquid.

A sensitive measurement of optoacoustic (OA), also referred to as "photoacoustic" (PA), properties of cells, also cells in flow, or their acoustic responses to optical signals is desirable as they correspond to the optical absorption of cellular compounds. Hence, the optoacoustic spectral characteristics can deliver information on the cell state or disease parameters but can also be used for high-throughput cell-sorting by intrinsic properties without additional fluorescence labeling.

Current implementations of optoacoustic measurements of cells in a fluidic context typically use so-called bulk or volume acoustic wave based piezoelectric ultrasound transducers coupled to a so-called fluidic chip via a coupling medium to record the ultrasound signal originating from absorbing species in cells when excited by laser pulses. However, the arrangement of bulk wave transducers outside the fluidic chips results in a bulky design and leads to coupling interlayer effects resulting in strong attenuation and a reduction of the sensitivity. Further, a reproducible and precise arrangement of the transducer to the fluidic vessel is very challenging so that such a design is not suitable for mass fabrication.

The present disclosure is based on the problem to provide an improved device and method for detecting particles, in particular microparticles, bioparticles, single cells or cell clusters, contained in a liquid which in particular allows for a sensitive detection of optoacoustic signals emanating from the particles, in particular when the particles are in flow and/or contained in a flowing liquid, and/or for a spatial resolution and/or spatial selectivity in the order of the particle diameter and/or a miniaturization and/or parallelization.

The problem is solved by a device and method for detecting particles according to the independent claims.

According to a first aspect of present disclosure, a device for detecting particles, in particular microparticles or bioparticles such as single cells or cell clusters, contained in a liquid, comprises an irradiation device configured to irradiate a volume of the liquid with time-varying, in particular pulsed or modulated, electromagnetic radiation, and at least one focused interdigital transducer (fIDT) configured to detect surface acoustic waves emanating from particles contained in the liquid in response to irradiating the volume of the liquid with the electromagnetic radiation. Preferably, the at least one focused interdigital transducer has a focal point or focal area and is arranged such that the focal point or focal area of the focused interdigital transducer is located at and/or close to the irradiated volume of the liquid containing the particles and/or at least partially overlaps and/or coincides with the irradiated volume of the liquid containing the particles.

According to a second aspect of present disclosure, a method for detecting particles, in particular microparticles or bioparticles such as single cells or cell clusters, contained in a liquid, comprises the following steps: i) irradiating a volume of the liquid with time-varying electromagnetic radiation, and ii) detecting surface acoustic waves emanating from particles contained in the liquid in response to irradiating the volume of the liquid with the electromagnetic radiation by means of at least one focused interdigital transducer (fl DT) having a focal point or focal area. Preferably, the focal point or focal area of the focused interdigital transducer is located at and/or close to the irradiated volume of the liquid and/or at least partially overlaps and/or coincides with the irradiated volume of the liquid containing the particles.

Aspects of the present disclosure are preferably based on the approach of irradiating a liquid containing particles of interest, for example microparticles or bioparticles such as cell clusters or single cells, with time-varying electromagnetic radiation to excite the particles to emit optoacoustic waves due to the optoacoustic effect (also referred to as "photoacoustic effect"), and to detect surface acoustic waves (SAW), which are excited by the so-called "bulk" optoacoustic waves emitted by the particles, by means of a focused interdigital transducer (fIDT), wherein the focal point or focal area of the focused interdigital transducer is preferably located at and/or close to the irradiated volume of the liquid. Preferably, the focal point or focal area of the focused interdigital transducer may at least partially overlap and/or coincide with the irradiated volume of liquid. For example, the irradiated volume of the liquid can be a spot-like region on which the electromagnetic radiation is focused. Alternatively, a larger or broader volume of the liquid is irradiated, for example by using unfocused, e.g. collimated or divergent, electromagnetic radiation. Opposite to conventional applications, where interdigital transducers are used for generating surface acoustic waves for non-contact micromanipulation of particles contained in microfluidic systems, e.g., for particle capture, alignment and/or sorting activities (also referred to as "SAW-driven acousto-fluidic actuation"), the focused interdigital transducer is used for detecting surface acoustic waves emanating from excited point source-like particles (being the source(s) of optoacoustic waves), thereby enabling a detection of the surface acoustic waves with a spatial resolution and/or spatial selectivity in the order of the particle diameter, e.g. the cell diameter. In this way, a point source-optimized detection of surface acoustic waves is achieved. Further, in distinction to conventional implementations where bulk wave piezoelectric transducers are provided outside fluidic chips which include, e.g., a fluidic vessel or channel containing the liquid, the present disclosure allows for integrating both the focused interdigital transducer and the fluidic vessel on the same substrate (also referred to as "on-chip") enabling a reproducible and precise arrangement of the transducer relative to the fluidic vessel and offering the possibility for miniaturization and parallelization of the device design.

In summary, the present disclosure allows for a sensitive detection of optoacoustic waves emanating from particles contained in a liquid with a spatial resolution or spatial selectivity in the order of the particle diameter. Further, the disclosure enables a reproducible, precise, miniaturized and/or parallelized design of the device.

Preferably, within the context of the present disclosure, detecting surface acoustic waves "emanating from the particles" does not necessarily imply that the surface acoustic waves are directly or immediately emanating from the particles. Rather, the surface acoustic waves (SAW) are generated and/or induced and/or excited in the substrate of the fl DT by the bulk optoacoustic waves (BAW) emanating from and/or emitted by the particles in response to irradiating the particles with the pulsed electromagnetic radiation. Specifically, for an angle of BAW incidence to the substrate equal to the so-called Rayleigh angle, the phase matching condition for an optimal BAW-to-SAW conversion is fulfilled despite the strongly different acoustic impedances of the liquid and the substrate. The SAW are locally excited and propagate along the surface of the substrate, governed by the shape of the acoustic slowness curve and with a penetration depth into the substrate of about one to two wavelengths. Hence, the acoustic wave energy is concentrated close to the surface of the substrate and can be detected with high geometrical resolution and practically negligible attenuation by using the focused interdigital transducer provided (e.g. patterned in planar technology) on the surface of the substrate.

Preferably, within the context of the present disclosure, providing the focal point or focal area of the fl DT "at" the irradiated volume of the liquid does not necessarily imply that focal point or focal area is exactly located "in" or "coincides with" the irradiated volume containing the particles emitting optoacoustic waves. Rather, it may be preferred that the focal point or focal area of the fIDT is located at a position on the substrate which is close to, e.g. beneath, the optoacoustic wave-emitting particles contained in the liquid.

Preferably, the at least one focused interdigital transducer comprises an electrode structure which is arranged on a substrate, wherein the substrate preferably comprises or is given by a piezoelectric substrate and/or by a piezoelectric layer or plate provided on a non-piezoelectric substrate and/or by a non-piezoelectric layer or plate provided on a piezoelectric substrate. Preferably, the electrode structure comprises two comb-like interlocking periodic arrays of curved electrodes, which are also referred to as "fingers". For example, the electrodes or fingers may have the shape of concentrically arranged circular arcs.

Preferably, the at least one focused interdigital transducer has a focal length which is 0.01 mm to 50 mm, in particular 0.1 mm to 10 mm, preferably 1 mm to 5 mm, wherein the focal length is preferably given by a distance of the focal point or focal area from the electrode structure of the focused interdigital transducer, in particular from the finger of the electrode structure which is closest to the focal point or focal area. Preferably, to ensure that the focal point or focal area of the focused interdigital transducer is located in and/or at least partially overlaps with the irradiated volume of the liquid, the focused interdigital transducer has a distance from the liquid, in particular from the irradiated volume of the liquid, which corresponds to the focal length.

Preferably, the at least one focused interdigital transducer has a center frequency, also referred to as "working frequency" or "operating frequency", which is in a range between 1 MHz and 500 MHz, in particular between 1 MHz and 150 MHz. Preferably, the center frequency f is determined by the period *p* (also referred to as "pitch") of the fingers of the electrode structure as follows: *f = v*/*p,* wherein *v* is the (phase) velocity of the acoustic waves in the substrate.

Preferably, the center frequency of the fIDT and/or the period or pitch of the fingers of the electrode structure is selected and/or chosen dependent on and/or as a function of the size of the particles to be observed, also referred to as "particles of interest". In other words, by selecting and/or controlling the operating frequency of the fIDT(s) by the respective finger period, a tailored production of fIDT(s) for detecting, e.g., a specific cell type of interest is readily possible. Alternatively, or additionally, it is also possible to provide several fIDTs exhibiting different center frequencies and to arrange them, e.g., either downstream (if the particles are contained in a flowing liquid) or in a circular arrangement around a measurement point or region. Also, size measurements are possible via the ultrasound frequency being dependent on the emitting particle.

The preferred embodiments above are based on the observation that the detectability (e.g., signal strength, signal-to-noise ratio) of an observed particle (particle of interest) of a given size depends on the center frequency of the fIDT or, conversely, that it is possible to detect particles of interest of a given size with increased sensitivity by selecting an appropriate center frequency of the fIDT. For example, for blackened polystyrene beads having a diameter of 3 µm, red blood cells (RBC) having a typical diameter of approximately 7 µm, and B16 melanoma cells having a typical diameter of 23 µm the following signal-to-noise ratios (SNRs) were observed with fIDTs having focal lengths of, e.g.,1 or 3 mm: The 100 MHz fIDT has a significantly higher SNR when detecting the beads compared to 10 and 25 MHz. For RBCs, 50 MHz and 100 MHz fIDTs show a significantly higher SNR than a 25 MHz fIDT. In contrast, the 25 and 50 MHz fIDTs show the highest SNR for B16 melanoma cells. Preferably, the frequency selectiveness is further promoted by relatively narrow bandwidths of the fIDTs (of preferably about 13.3%, 10%, 10% and 8% of the respective center frequency of 10, 25, 50 and 100 MHz) affecting signal strength, noise, and SNR.

Preferably, the device further comprises a signal processing circuit configured for an analog processing, in particular an analog amplification and/or an analog rectification and/or an analog filtering, of a detection signal corresponding to the surface acoustic waves detected by the focused interdigital transducer, wherein the signal processing circuit is configured to determine an analog amplitude and/or an analog phase of the detection signal.

The focused interdigital transducer converts the detected surface acoustic waves emanating from the particles into an analog, in particular oscillating, detection signal which is forwarded to the signal processing circuit for an at least partial analog processing, i.e. at least one of the signal processing steps performed by the signal processing circuit, e.g. amplification and/or rectification and/or filtering, is an analog processing of the analog detection signal. Preferably, the signal processing circuit comprises at least one bandpass filter configured to pass only signal components of the detection signal at frequencies which are within a predefined frequency band around a working frequency of the focused interdigital transducer, and/or at least one rectifier configured to convert the bandpass-filtered detection signal into a rectified signal, and/or at least one lowpass filter configured to pass only signal components of the rectified signal at frequencies which are lower than a cutoff frequency, which preferably corresponds to a pulse repetition rate of the pulsed electromagnetic radiation, wherein the bandpass filter is an analog bandpass filter and/or the rectifier is an analog rectifier and/or the lowpass filter is an analog lowpass filter, and wherein the analog amplitude and/or analog phase of the detection signal is given by the lowpass-filtered rectified signal. Preferably, the optoacoustic surface acoustic wave signal (i.e. the detection signal) can be amplified in the analog domain and then separated from noise by an analog bandpass filter. If only the amplitude of the oscillating signal is needed for the evaluation, a rectifier and a low-pass filter can be used to separate the signal oscillating at 50 MHz, for example, to a voltage (amplitude) having a time behavior that only corresponds with each individual irradiation pulse (e.g. laser pulse) having a repetition rate of, e.g., 100 kHz only.

Advantageously, providing a signal processing circuit for an at least partial analog processing or evaluation of the detection signal as described above makes expensive highspeed data acquisition (DAQ) cards with 1 GS/s sampling rates dispensable. Therefore, this is a particularly cost-effective way of manufacturing the device.

Preferably, an analog-to-digital converter (ADC) is provided which is configured to convert the determined analog amplitude and/or analog phase of the detection signal into a digital amplitude and/or digital phase of the detection signal. The digitized detection signal (i.e. the digital amplitude and/or digital phase) can then be subjected to a digital further processing. Preferably, the analog signal (amplitude and/or phase) can be digitized with an inexpensive analog-digital converters (ADC) to further reduce the overall costs for signal processing and valuation of the detection signals.

Preferably, a controller, in particular a microcontroller, is provided for detecting particles of interest (e.g. by identifying peaks in the optoacoustic surface acoustic wave signal over time/laser pulses) and optionally further evaluating the respective signals.

Preferably, the irradiation device is configured to focus the pulsed or modulated electromagnetic radiation on the volume of the liquid, wherein the focal point or focal area of the focused interdigital transducer coincides and/or at least partially overlaps with the volume of the liquid on which the electromagnetic radiation is focused. In this way, the irradiated volume of the liquid is given by the focus point or area in which the electromagnetic radiation is focused. For example, at least one focusing element, such as a lens or mirror, may be provided for focusing the pulsed electromagnetic radiation onto the liquid. Alternatively, the irradiation device itself may be configured to emit a focused and/or collimated and/or narrow beam of electromagnetic radiation.

For example, the irradiation device may comprise a dye laser, a laser diode, diode-pumped solid-state lasers (DPSSL) and/or a vertical cavity surface emitting laser (VCSEL). It is particularly preferred to use small and inexpensive high-repetition-rate pulsed laser diodes.

Preferably, the device comprises at least one fluidic channel, also referred to as "microfluidic channel" or "on-chip microfluidic channel", which is provided on and/or in the substrate of the focused interdigital transducer and configured to convey the liquid relative to the electrode structure, wherein the focal point or focal area of the focused interdigital transducer is located in or on the fluidic channel and/or in the liquid contained and/or conveyed by the fluidic channel. Preferably, the irradiation device is configured to irradiate the fluidic channel with the electromagnetic radiation, in particular to focus the electromagnetic radiation to the fluidic channel. Preferably, the focal point or focal area of the focused interdigital transducer and the electromagnetic radiation, in particular the focus of the electromagnetic radiation, coincide and/or at least partially overlap at and/or inside the fluidic channel.

Preferably, the at least one fluidic channel comprises walls and a cover which are made of a polymer or a glass or a ceramic film, wherein the geometric dimensions, in particular width and/or height and/or thickness, of the walls and the cover are in the order of magnitude of, preferably 0.1 to 10 times, the acoustic wavelength of the surface acoustic waves emanating from particles contained in the liquid and/or in the range of 5 to 1000 µm.

Preferably, the substrate is or comprises a plate or a film or a microchip made of glass/glasses/ceramics (e.g. SiO2, Al203, Si3N4, TiN, SiN, borosilicate glass), piezoelectrics (e.g. quartz, LiNbO3, black-LiNbO3, yellow-black LiNbO3, LiTa03, AIN, AIScN, ZnO, CTGS, Langasite, gallium orthophosphate, PZT, PMN-PT, PVDF), metals/metal alloys (e.g. Al, Cu, Ti, Ta, TiAl, CuTi) or polymers (PMMA, PTFE, PEEK, polyimide, PET, COP, PDMS, PC, COC, polycaprolactone, PS) or photoresists (e.g. SUEX, ADEX, TMMF S2045, Ordyl, SU-8), made of semiconductors (Si, GaAs, InAs, GaN) or combinations of these materials. Alternatively or additionally, the substrate is given by a layer of the aforementioned materials provided on a non-piezoelectric substrate. Preferably, the at least one on-chip (micro)fluidic channel is made of a hard material, e.g. SUEX, ADEX, TMMF S2045, Ordyl, SU-8, DF3050.

Advantageously, providing the substrate(s) with such fluidic channel(s) allows for producing acousto-fluidic components of the device with improved properties, in particular greater structural accuracy, and in large quantities and by a cost-effective and simple process.

Preferably, the irradiation device is arranged and/or configured to irradiate the volume of the liquid and/or the fluidic channel from below and/or through the substrate of the focused interdigital transducer. Preferably, a possible birefringence of the substrate is also taken into account, e.g. by providing polarizing filters. In this embodiment, the substrate of the fl DT is at least partially transparent for the electromagnetic radiation that is to irradiate the liquid.

Alternatively or additionally, the irradiation device is arranged and/or configured to irradiate the volume of the liquid and/or the fluidic channel from above and/or through the cover material of the chip and/or through the cover of the fluidic channel. In this embodiment, the cover of the chip and/or of the fluidic channel is at least partially transparent for the electromagnetic radiation that is to irradiate the liquid.

Preferably, several fl DTs with different and/or identical center frequencies are provided on one chip, i.e. on a single or common substrate, wherein transducers (in particular the respective electrode structures of the transducers) are preferably provided on the top or the bottom of the substrate or on both sides (top and bottom) of the substrate. Preferably, the fIDTs are impedance-matched fIDTs. Providing several fIDTs on one chip is particularly advantageous in applications, e.g., when particles of different sizes shall be detected by applying different center frequencies and/or when different wavelengths shall be used for an excitation at different points in the liquid and/or the fluidic channel with the same fIDT type, and/or in any case when several illuminations or a linear illumination shall be provided along the fluidic channel.

A particularly preferred example of a device and method, in which some of the preferred aspects described above are combined, includes the use of one or more fIDTs provided on a substrate (i.e. a piezoelectric substrate and/or a piezoelectric layer provided on a non-piezoelectric substrate and/or on a non-piezoelectric layer provided on a piezoelectric substrate), wherein the fIDTs are tuned in their frequency range (center frequency and/or bandwidth) to the particle size, e.g. cell size, and in their electrode shape to a detection of the wave fields emanating from the particles, e.g. cells, which are considered as an acoustic point source, preferably in combination with microstructured fluidic channel(s) and an optical excitation of the particles, e.g. cells, using highly repetitive laser diodes. Advantageously, the resulting device (i.e. measurement unit on a chip) has a volume of typically 1x1x1 cm³, or even smaller, with high sensitivity and high SNR.

Although some of the preferred embodiments discussed above are particularly suitable for in-vitro or laboratory applications, the disclosed device and method is also suitable for in-vivo applications, for example as an attached sensor or wearable.

It is, therefore, particularly preferred that the device and/or the at least one focused interdigital transducer is configured for being applied to and/or attached to and/or coupled to and/or placed on a biological tissue, in particular the skin of a human or an animal, wherein the irradiation device is configured to irradiate a volume of a liquid contained in the tissue with time-varying electromagnetic radiation. For example, the irradiated liquid may be an interstitial liquid and/or a liquid contained in vessels, such as blood contained in blood vessels, containing the particles of interest, such as red blood cells or other bioparticles.

Preferably, the focused interdigital transducer, when acoustically coupled to the tissue, can detect surface acoustic waves emanating from particles contained in the volume in response to irradiating the volume with the electromagnetic radiation. Preferably, the focal point or focal area of the fl DT is located at a point or an area on the substrate that is close to and/or above the irradiated volume located below the fIDT.

Preferably, the surface acoustic waves detected by the fl DT are excited in the substrate of the fIDT by the optoacoustic waves emanating from and/or emitted by the particles contained in the tissue volume (located below the substrate and acoustically coupled to the fIDT) in response to irradiating the volume with the pulsed electromagnetic radiation.

Preferably, the fIDT has a top surface, which corresponds to the substrate surface on which the electrode structure is provided, and a bottom surface opposite the top surface, wherein the fIDT is applied to and/or acoustically coupled to the tissue with its top surface, and wherein the irradiation device is provided at or on the bottom surface of the fIDT and configured to irradiate the volume in the tissue, which is provided at and/or in contact with the top surface of the fIDT, through the substrate of the fIDT, which is at least partially transparent for the electromagnetic radiation.

Preferably, the fIDT and the irradiation device and an optional signal processing circuit for an (at least partial) analog processing of the detection signal (as described in detail above) and/or an optional analog-to-digital converter (ADC) for converting the processed analog detection signal into a digital detection signal (as described in detail above) and/or an optional microcontroller for detecting particles of interest (as described in detail above) can be integrated in a housing that can be worn on the body (e.g. in the form of a wristwatch, a patch applicable to the skin or a via a chest belt) or implanted in the body.

Further advantages, features and examples of the present disclosure will be apparent from the following description of following figures, wherein:
Fig. 1 shows a top view (a) and a side view (b) of a first example of a device for detecting particles;
Fig. 2 shows a top view of a second example of a device for detecting particles;
Fig. 3 shows a third example of a device for detecting particles;
Fig. 4 shows a top view of an example for arranging several focused interdigital transducers; and
Fig. 5 shows a side view of an example of a device for detecting particles in an in-vivo application.

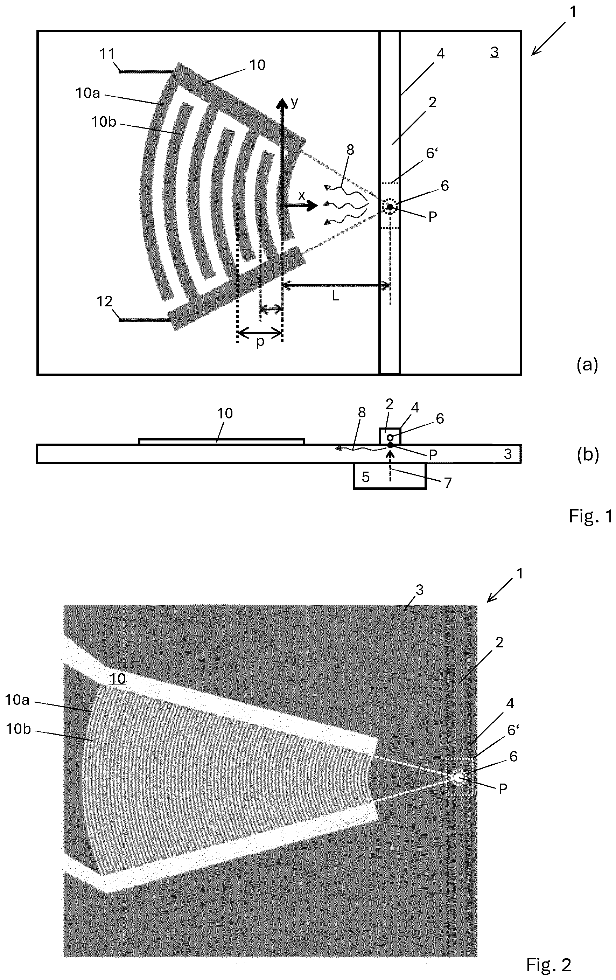

Figure 1 shows a schematic and not to scale representation of a top view (a) and a side view (b) of a first example of a device 1 for detecting particles, in particular microparticles or bioparticles such as single cells or cell clusters, which are contained in a liquid 2.

The device 1 comprises a substrate 3 which is preferably a piezoelectric substrate and/or a piezoelectric layer or plate provided on a non-piezoelectric substrate and/or a non-piezoelectric layer or plate provided on a piezoelectric substrate. Further, a fluidic channel 4 is provided on a top surface of the substrate 3 and configured to receive and/or contain the liquid 2, in particular to convey the liquid 2 in y-direction. Optionally, a pump and/or flow control system (not shown) may be provided to control the flow speed and/or the flow rate of the flowing liquid 2 in the fluidic channel 4. For example, a flow speed of approx. 2.3 µm/ms, and a flow rate is approx. 0.5 µl/min. Preferably, depending on the cross-section of the fluidic channel, flow speeds of 1 mm/s to 1 m/s and flow rates of 0.1 µl/min to 200 µl/min are provided.

The device 1 further comprises an irradiation device 5, for example a laser diode, which is configured to irradiate a volume 6, 6' of the liquid 2 with pulsed and/or modulated electromagnetic radiation 7. In the present example, the irradiation device 5 is provided on a bottom surface of the substrate 3, which is at least partially transparent for the electromagnetic radiation 7.

Preferably, the irradiation device 5 is configured to irradiate the liquid 2 with pulsed electromagnetic radiation 7 having a pulse repetition rate of 1 kHz to 500 kHz. Preferably, the wavelength of the electromagnetic radiation 7 may be in a range of 250 nm to 1.500 nm, e.g. 532 nm or 570 nm, and is selected dependent on the absorption characteristics of the observed particles of interest. Preferably, the lower limit (250 nm) of the specified wavelength range can be extended to even lower limits in the UV, e.g. down to approx. 200 nm, in order to detect signals from DNA, for example. Preferably, the irradiation device 5 is further configured to irradiate the liquid 2 with focused electromagnetic radiation 7 so that the irradiated volume corresponds to the focus of the irradiation device 5, e.g. a focus area or a focus spot 6, which preferably has a diameter of 0.5 to 20 µm, in particular 0.5 to 5 µm, preferably approx. 1 µm. For example, the effective excitation light fluence in the focus spot 6 is typically in the order of 130 µJ/mm² (400 µJ/pulse @ 10 kHz), which is in accordance with energies achieved by pulsed laser diodes (190 µJ/pulse @ 200 kHz).

Alternatively, the irradiation device 5 may be configured to irradiate the liquid 2 with unfocused and/or collimated and/or divergent electromagnetic radiation 7 so that a larger section 6' of the liquid 2 is irradiated.

Irradiating the volume 6, 6' of the liquid 2 with the time-variable electromagnetic radiation 7 excites particles contained in the liquid 2 to emit optoacoustic waves which in turn excite surface acoustic waves (SAW) 8 in the substrate 3 and/or on the substrate surface.

The surface acoustic waves 8 are detected by a focused interdigital transducer (fIDT) comprising an electrode structure 10 provided on the substrate 3. The electrode structure 10 comprises two comb-like interlocking periodic arrays of curved electrodes 10a, 10b, which are also referred to as "fingers" and have a curved shape, e.g. the shape of concentrically arranged circular arcs. It is noted, however, that the curved electrodes 10a, 10b do not necessarily have to be circular arc-shaped or arranged concentrically to each other, but can have, depending on the application and/or purpose, any other shape and/or arrangement with respect to each other. Preferably, the curved electrodes 10a, 10b are advantageously adapted to the anisotropy of the substrate 3.

It is further noted that, for illustration purposes, the electrode structure 10 shown in figure 1 comprises only a few curved electrodes 10a, 10b in each array, whereas it is preferred that the electrode structure 10 may comprise any, in particular higher, number and/or a plurality of curved electrodes 10a, 10b.

This is exemplarily illustrated in figure 2 showing a second example of a device 1 wherein the electrode structure 10 provided on the substrate 3 comprises a considerably larger number of curved electrodes 10a, 10b. Further, each one of the electrodes 10a, 10b is given by a pair of curved fingers, while in the example shown in figure 1 each one of the electrodes 10a, 10b is given by only one curved finger. Apart from these differences, the above and the following explanations with respect to the example shown in figure 1 apply accordingly to the example shown in figure 2.

Due to the shape of the electrode structure 10 described above, the fIDT has an area in which its sensitivity to the surface acoustic waves 8 propagating in the substrate 3 is highest. Within the context of the present disclosure, this area is denoted as "focal point" or "focal area" of the fIDT. Preferably, the electrode structure 10 and the fluidic channel 4 are arranged relative to each other such that the focal point P of the fl DT is located at and/or close to and/or at the level of the irradiated volume 6 or 6' of the liquid 2 contained in the fluidic channel 4. Preferably, as apparent from the side view in figure 1 (b), the focal point P in the substrate 3 is located below the focus spot 6 in the liquid 2. Further, the focal length L corresponding to the distance between the focal spot P and the electrode structure 10 is preferably 0.01 mm to 50 mm, more preferably 0.1 mm to 10 mm, in particular 1 mm to 5 mm.

It has been found that the detectability (e.g. signal strength, signal-to-noise ratio) of particles of interest of a given size depends on the center frequency *f* of the fl DT or, conversely, that it is possible to detect particles of interest of a given size with increased sensitivity by selecting an appropriate center frequency f of the fIDT. The center frequency f is determined by the period *p* (also referred to as "pitch") of the electrodes 10a, 10b of the electrode structure 10 as follows: *f = v*/*p,* wherein *v* is the (phase) velocity of the surface acoustic waves in the substrate 3. Thus, by selecting the operating frequency *f* of the fIDT via the respective finger period *p*, the fIDT can be "tailored" or customized to detect particles of interest of a predefined size and/or type with increased sensitivity and reliability. For example, depending on the size and/or type of the particles to be observed, the center frequency *f* is preferably in a range between 1 MHz and 500 MHz, in particular between 1 MHz and 150 MHz.

The fIDT converts the detected surface acoustic waves 8 into a voltage (also referred to as "detection signal") which can be tapped via connections 11, 12 attached to the electrodes10a, 10b, respectively, for processing and evaluation (for details see below).

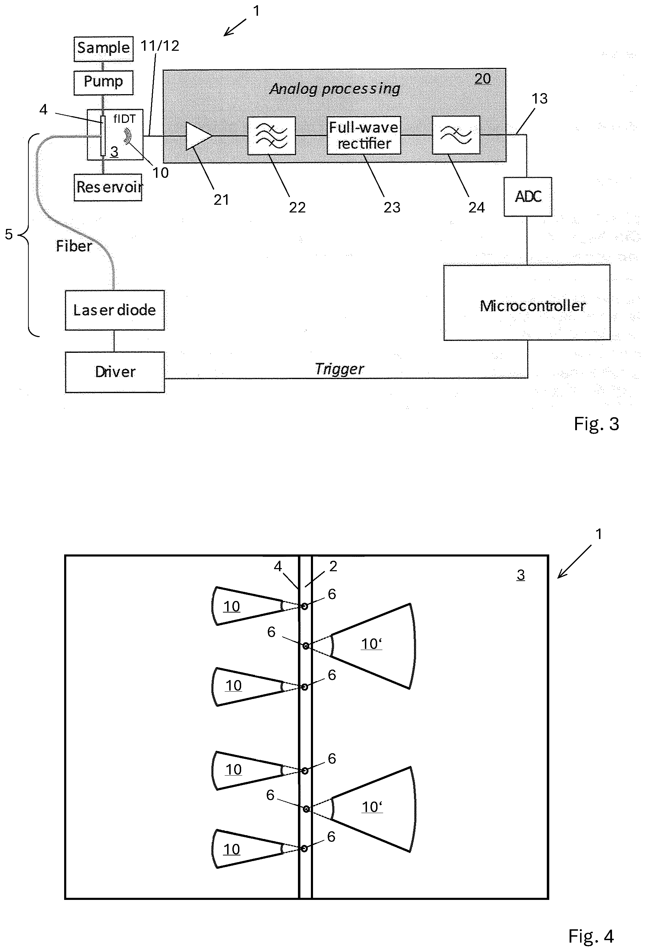

Figure 3 shows a third example of a device 1 for detecting particles, wherein both an electrode structure 10 and a fluidic channel 4 are provided on a substrate 3. In this respect, the above explanations with reference to figures 1 and 2 apply accordingly. In the present example, an irradiation unit 5 comprises a laser diode and a fiber guiding electromagnetic radiation from the laser diode to the fluidic channel 4. Further, a pump is provided to transport a sample liquid containing particles of interest through the fluidic channel 4. After having passed the fluidic channel 4, the sample liquid is collected in a reservoir.

In the present example, the detection signals generated by the fIDT are fed via connections 11, 12 (see also figure 1) into an analog processing circuit 20 which is configured for an at least partial analog processing of the detection signals. Preferably, the processing circuit 20 comprises an amplifier 21, in which the detection signals are amplified, a bandpass filter 22 which passes only signal components of the detection signals at frequencies which are within a predefined frequency band around the center frequency of the fl DT, a rectifier 23 converting the bandpass-filtered detection signal into a rectified signal, and a lowpass filter 24 which passes only signal components of the rectified signal at frequencies which are lower than a cutoff frequency, which preferably corresponds to a pulse repetition rate of the pulsed electromagnetic radiation 7. The provision of the analogue processing circuit 20 for pre-processing the detection signals eliminates the need for expensive highspeed data acquisition (DAQ) cards with typical sampling rates of 1 GS/s, making the device 1 particularly cost-effective.

The analog amplitude signal and/or analog phase signal 13 obtained from the processing circuit 20 is fed into an analog-to-digital converter ADC where it is converted into a digital amplitude signal and/or digital phase signal which can be further processed and/or evaluated digitally in a microcontroller. Preferably, the microcontroller is also configured to trigger a driver for the laser diode.

Figure 4 shows a schematic top view of an example of a device 1, wherein electrode structures 10, 10' of multiple fl DTs are arranged on a substrate 3 along a fluidic channel 4.

Further, multiple irradiation devices (not shown) are provided, preferably on the bottom surface of the substrate 3, to irradiate the liquid 2 contained in the fluidic channel 4 with focused electromagnetic radiation. Preferably, each of the resulting focus spots 6 is located at and/or close to and/or above a focal point or focal area of one of the electrode structures 10, 10' of the fl DTs. For further details, in particular regarding the design of the electrode structures 10, 10', properties of the irradiation devices and the fIDTs and signal processing, the above explanations with reference to fig. 1 to 3 apply accordingly.

Preferably, the irradiation devices are configured to emit electromagnetic radiation of different wavelengths so that, in each or at least in some of the focus spots 6, the liquid 2 is irradiated with a different wavelength. By choosing the respective excitation wavelength(s), specific particles and/or biomolecules of interest (e.g. cell types of interest) can be selectively detected and/or measured. For example, blood oxygenation can be measured by providing (several different) wavelengths between approximately 550 nm and 900 nm.

In the present example, four electrode structures 10 with a short focal length, e.g. 1 mm, are arranged on one side of the fluidic channel 4, while two electrode structures 10' with a longer focal length, e.g. 2 or 3 mm, are arranged on the opposite side of the fluidic channel 4. It is noted, however, that a higher or lower number of, e.g. only two or more than two or four, electrode structures 10, 10' may be provided, that the electrode structures 10, 10' do not necessarily have to differ in their respective focal length and do not necessarily have to be provided on both sides of the fluidic channel 4 but rather on only one side. Further, it is not only preferred to provide multiple fIDTs on one surface, e.g. on the top or bottom surface, of the substrate 3, but also on the top and bottom surface of the substrate 3.

Although the respective shape and/or layout of the shown electrode structures 10 and 10' is identical for the sake of simplification, it is preferred that the electrode structures 10 and 10' may be different with respect to their shape and/or layout. Preferably, the electrode structures 10 and 10' are designed such that they exhibit different center frequencies (for details, see above). In this way, the respective electrode structures 10 and 10' can be tailored or customized to detect particles of interest of a given size and/or type.

All in all, the device 1 allows for (simultaneously) detecting particles and/or biomolecules of different sizes and/or types while the liquid 2 is being conveyed through the fluidic channel 4.

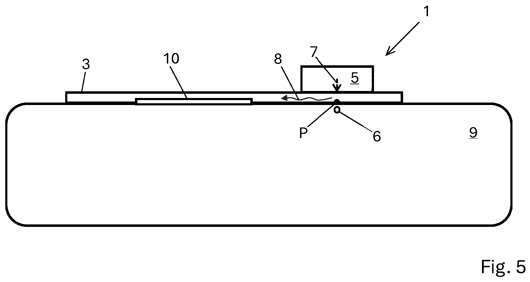

Figure 5 shows a side view of an example of an in-vivo application a device 1, e.g. by integrating the device 1 into a so-called wearable, such as a smartwatch, or in a type of patch that can be applied to the skin.

Preferably, the device 1 is applicable to a biological tissue 9, in particular the skin of a human or an animal, by coupling a surface of the substrate 3, on which at least one electrode structure 10 of an fIDT is provided, to the tissue 9. Preferably, an acoustic coupling medium may be provided between the device 1 and the tissue 9 to improve acoustic coupling.

An irradiation device 5 is provided on the opposite surface of the substrate 3 to irradiate a volume, in particular a focus spot 6, in the tissue 9 with time-varying electromagnetic radiation 7. Other than in the examples shown in figures 1, 2 and 4, a fluidic channel for containing and/or conveying liquid is dispensable since the liquid, which contains particles or biomolecules of interest, is contained in the tissue 9, e.g. in vessels, such as blood vessels, or interstitial liquid in the dermis.

Surface acoustic waves 8 excited in the substrate 3 by optoacoustic waves emanating from the irradiated volume 6 are detected by the at least one electrode structure 10 of the focused interdigital transducer. Preferably, the focal point or focal area P of the focused interdigital transducer is located at a point or an area on the surface of the substrate 3 that is close to and/or above the irradiated volume 6 of the tissue 9 located below the substrate 3.

For further details, the above explanations with reference to figures 1 to 4 apply accordingly to the example shown in figure 5.

## Claims

1. A device (1) for detecting particles, in particular microparticles, bioparticles, single cells or cell clusters, contained in a liquid (2), the device (1) comprising
- an irradiation device (5) configured to irradiate a volume (6, 6') of the liquid (2) with time-varying, in particular pulsed or modulated, electromagnetic radiation (7), and
- at least one focused interdigital transducer (10) configured to detect surface acoustic waves (8) emanating from particles contained in the liquid (2) in response to irradiating the volume (6, 6') of the liquid with the electromagnetic radiation (7), wherein the at least one focused interdigital transducer (10) has a focal point or focal area (P) and is preferably arranged such that the focal point or focal area (P) of the focused interdigital transducer (10) is located at or close to the irradiated volume (6, 6') of the liquid (2) containing the particles.

2. The device (1) according to claim 1, wherein the at least one focused interdigital transducer (10) has a focal length (L) which is 0.01 mm to 50 mm, in particular 0.1 mm to 10 mm, preferably 1 mm to 5 mm.

3. The device (1) according to any one of the preceding claims, wherein the at least one focused interdigital transducer (10) has a center frequency which is in a range between 1 MHz and 500 MHz, in particular between 1 MHz and 150 MHz.

4. The device (1) according to any one of the preceding claims, further comprising a signal processing circuit (20) configured for analog processing, in particular analog amplification and/or analog rectification and/or analog filtering, of a detection signal (11, 12) corresponding to the detected surface acoustic waves (8), wherein the signal processing circuit (20) is configured to determine an analog amplitude and/or an analog phase of the detection signal (11, 12).

5. The device (1) according to claim 4, the signal processing circuit (20) comprising
- at least one bandpass filter (22) configured to pass only signal components of the detection signal (11, 12) at frequencies which are within a predefined frequency band around a center frequency of the focused interdigital transducer (10),
- at least one rectifier (23) configured to convert the bandpass-filtered detection signal into a rectified signal, and
- at least one lowpass filter (24) configured to pass only signal components of the rectified signal at frequencies which are lower than a cutoff frequency, which preferably corresponds to a pulse repetition rate of the pulsed electromagnetic radiation (7),
wherein the bandpass filter (22) is an analog bandpass filter and/or the rectifier (23) is an analog rectifier and/or the lowpass filter (24) is an analog lowpass filter, and wherein the analog amplitude and/or analog phase of the detection signal (11, 12) is given by the lowpass-filtered rectified signal.

6. The device (1) according to claim 4 or 5, further comprising an analog-to-digital converter (ADC) configured to convert the determined analog amplitude and/or analog phase of the detection signal (11, 12) into a digital amplitude and/or digital phase of the detection signal (11, 12).

7. The device (1) according to any one of the preceding claims, wherein the irradiation device (5) is configured to focus the pulsed electromagnetic radiation (7) on the volume (6) of the liquid (2), wherein the focal point or focal area (P) of the focused interdigital transducer (10) is close to and/or coincides and/or at least partially overlaps with the volume (6) of the liquid (2) on which the electromagnetic radiation (7) is focused.

8. The device (1) according to any one of the preceding claims, wherein the at least one focused interdigital transducer (10) comprises an electrode structure (10) which is arranged on a substrate (3), wherein the substrate (3) comprises or is given by a piezoelectric substrate and/or a piezoelectric layer or plate provided on a non-piezoelectric substrate and/or a non-piezoelectric layer or plate provided on a piezoelectric substrate.

9. The device (1) according to claim 8, further comprising at least one fluidic channel (4) provided on the substrate (3) and configured to convey the liquid (2) relative to the electrode structure (10), wherein the focal point or focal area (P) of the focused interdigital transducer (10) is located at or close to the fluidic channel (4) and/or the irradiation device (5) is configured to irradiate the fluidic channel (4) with the electromagnetic radiation (7), in particular to focus the electromagnetic radiation (7) on the fluidic channel (4).

10. The device (1) according to claim 9, wherein the at least one fluidic channel (4) comprises walls and a cover which are made of a polymer or a glass or a ceramic film, wherein the geometric dimensions, in particular width and/or height and/or thickness, of the walls and the cover are in the order of magnitude of, preferably 0.1 to 10 times, the acoustic wavelength of the surface acoustic waves (8) emanating from particles contained in the liquid (2) and/or in the range of 5 to 1000 µm.

11. The device (1) according to any one of claims 1 to 8, wherein the device (1) and/or the at least one focused interdigital transducer (10) is configured for being applied, in particular coupled, to biological tissue (9), in particular to the skin of a human or an animal, wherein the irradiation device (5) is configured to irradiate a volume (6) of liquid contained in the tissue (9) with the time-varying electromagnetic radiation (7), and the focused interdigital transducer (10), when coupled to the tissue (9), is configured to detect surface acoustic waves (8) emanating from particles, which are contained in the volume (6), in response to irradiating the volume (6) with the electromagnetic radiation (7).

12. The device (1) according to claim 11, wherein the substrate (3) of the focused interdigital transducer (10) has a top surface, on which the electrode structure (10) is provided, and a bottom surface opposite the top surface, wherein the focused interdigital transducer (10) is configured to be acoustically coupled to the tissue (9) with the top surface of the substrate (3), and wherein the irradiation device (5) is provided at or on the bottom surface of the substrate (3) and configured to irradiate the volume (6) in the tissue (9), which is located at and/or in contact with the top surface of the substrate (3), through the substrate (3), which is at least partially transparent for the electromagnetic radiation (7).

13. The device (1) according to claim 11 or 12, wherein the focal point or focal area (P) of the focused interdigital transducer (10) is located at a point or an area on the substrate (3) that is close to and/or above the irradiated volume (6) in the tissue (9) located below the substrate (3).

14. A method for detecting particles, in particular microparticles, bioparticles, single cells or cell clusters, contained in a liquid (2), the method comprising the following steps:
- irradiating a volume (6, 6') of the liquid (2) with time-varying electromagnetic radiation (7), and
- detecting surface acoustic waves (8) emanating from particles contained in the liquid (2) in response to irradiating the volume (6, 6') of the liquid (2) with the electromagnetic radiation (7) by means of at least one focused interdigital transducer (10) having a focal point or focal area (P), wherein the focal point or focal area (P) of the focused interdigital transducer (10) is preferably located at and/or close to the irradiated volume (6, 6') of the liquid (2).
